# DEMANDE DE BREVET EUROPEEN

(11) **EP 3 173 993 A1**
(43) Date de publication de la demande: **31.05.2017**
(21) Numéro de dépôt: 15290292.0
(22) Date de dépôt: 24.11.2015
(51) Int. Cl.: G06Q 10/08, F25D 13/04, A47G 29/14

(54) **MISE À DISPOSITION DE PROXIMITÉ ET AUTOMATISÉE D'ARTICLES**

(71) Demandeur: ALTEOR, 13852 Aix-en-Provence Cedex 3 (FR)
(72) Inventeur: ALTEOR, 13852 Aix-en-Provence Cedex 3 (FR)
(74) Mandataire: GPI & Associés

(57) **Abrégé**

L'invention concerne la mise à la disposition d'une personne réceptrice (3), d'au moins un article acquis (4) et commandé (9), automatiquement par traitement informatique.

Une construction fixe (5) est prévue pour abriter la personne réceptrice (3) et à l'intérieur sont agencés des casiers à verrou (13), chacun pourvu d'un dispositif de fermeture / ouverture piloté (14) par un système informatisé (15) qui par ailleurs associe à chaque article acquis (4) au moins deux propriétés d'entreposage choisies entre : propriété d'entreposage rafraichi et propriété d'entreposage frigorifique. Chaque propriété d'entreposage est activable ou désactivable dans un ou plusieurs casiers (13) modulaires de manière temporisée lors d'une configuration (50) logistique (2) pour une mise à disposition donnée;

## Description

L'invention concerne le domaine technique général des structures physiques et des méthodes spécialement adaptées pour la logistique.

D'une part, le domaine technique de l'invention est celui des systèmes informatisés de contrôle et de suivi pour la mise à disposition d'articles, colis ou paquets. Quel que soit l'objet mis à disposition, celui-ci sera désigné par l'appellation « article ».

L'invention vise en particulier la mise à la disposition d'une personne réceptrice, d'au moins un article préalablement acquis puis obtenu par retrait différé.

Aussi, l'invention couvre les procédés afférents de contrôle, de commande, de transport, de suivi, d'entreposage et de mise à disposition, ici pour le retrait de ces articles.

L'invention fait donc partie des alternatives à la livraison classique d'articles par transporteur ou coursier.

Ce ou ces articles sont acquis suite à une commande, e.g. via une vente par correspondance ou directement par commande sur place à un guichet physique ou point de vente tel que la caisse d'un magasin, une borne informatique de vente. Ici, le terme « commande » désigne non seulement un achat, mais aussi d'autres moyens d'acquisition pas forcément mercantiles.

D'autre part, un domaine technique concerné par l'invention est celui des constructions dites fixes, notamment transportables et dites habitables. Typiquement, l'invention s'adresse à des constructions préfabriquées dont l'installation à un emplacement choisi ne nécessite pas de permis de construire.

Une telle construction fixe fait partie de la structure physique à fins logistique et constitue le lieu de la mise à disposition. Dans les exemples, la construction fixe est distincte, voire totalement séparée d'une infrastructure de commande, i.e. le point de vente ou le lieu où a été effectuée la commande du ou des articles.

Dans ce cas, la construction fixe de mise à disposition n'est évidemment par soumises aux règlements et contraintes administratives ou légales propres aux infrastructures de commande telles que les magasins.

Ainsi, un exemple de structure physique logistique comprend une ou plusieurs constructions fixes, mais également l'infrastructure de commande, des systèmes informatisés pour les communications et traitements d'informations, des dispositifs de transport des articles, notamment.

Dans nombre d'exemples de l'invention, la structure physique n'est pas un lieu de vente ou intégrée à l'intérieur d'un tel lieu de vente, de sorte que la structure physique n'est pas soumise de ce fait, aux impératifs légaux et réglementaires contraignants de ces lieux de vente. Plus simplement, la structure physique est alors purement un lieu de retrait d'articles.

Pour délivrer à la personne réceptrice un ou des articles, l'invention prévoit un système informatisé de contrôle et de suivi de la mise à disposition et de l'enlèvement du ou des articles acquis. La mise à la disposition selon l'invention est opérée en libre service et son contrôle est autant que possible automatisé.

Tout comme la construction fixe, ce système informatisé fait partie de la structure physique. Ce système informatisé fonctionne suivant un procédé de contrôle de la structure physique, pour permettre la mise à disposition des articles acquis. A cette fin, divers constituants de la structure physique sont raccordés d'un point de vue logique, au système informatisé, typiquement par l'intermédiaire de réseaux de communication de données.

Dans ces divers domaines techniques, citons quelques possibilités connues.

En préalable, évoquons deux alternatives courantes à la livraison classique.

Une première alternative est constituée par les points-colis, à savoir des infrastructures existantes, typiquement des commerces de proximité, où des colis sont livrés de manière centralisée et peuvent être retirés durant les horaires d'ouverture de ces infrastructures. Un employé du point-colis délivre sa commande à son destinataire, sur présentation d'un justificatif, en main propre et contre reçu.

Ces point-colis présentent un avantage pour les transporteurs qui peuvent livrer de nombreux colis dans une même tournée, à un nombre restreint de point-colis et dont les horaires d'ouverture sont pratiques, sans avoir à prendre rendez vous avec chaque destinataire final des colis à livrer en des lieux différents.

Une autre alternative à la livraison est le « retrait automobile » ou « retrait auto » ou « retrait express », connus sous la terminologie de « drive ». Il s'agit de points de retrait mis en place par des commerces de grande distribution, qui sont en général intégrés au terrain d'un point de vente et qui sont accessibles en automobile.

Concrètement, le client effectue sa commande en ligne, indique, le plus souvent à la commande, un créneau horaire pour son passage à un retrait automobile de son choix. Sa commande attend alors le passage au retrait automobile. Une fois sur place, le client stationne son véhicule à un emplacement de parking dédié du retrait automobile, paye sa facture si ce n'est pas déjà fait, et charge ou fait charger sa commande dans son véhicule.

Les retraits automobiles connaissent un succès considérable. Ainsi, parmi les commerces de grande distribution proposant en France ce service, 25% des enlèvements sont effectués via un retrait automobile ou « drive », sachant que récemment, les commandes par Internet ont doublé.

Toutefois, les horaires d'ouverture de tels retraits automobiles ne correspondent pas toujours avec les possibilités de visite des clients, ce qui en restreint la praticité.

Dans le même ordre d'idées, sont installés devant certains magasins, des casiers automatiques extérieurs de retrait de commandes, accessibles 24h/24 et 7j/7, qui peuvent servir aussi aux clients à retourner leurs produits.

Cependant, ces casiers automatiques extérieurs sont exposés aux intempéries, ne permettent pas l'intégration d'autres services, n'autorisent pas la conservation adéquate de nombre de produits notamment périssables, et sont d'un usage peu pratique et peu sécurisé.

D'autres techniques sont décrites dans les documents suivants.

Le document US2015193731 décrit un emplacement de livraison de commandes. Une commande par un client, effectuée par communication informatique détermine si l'emplacement qui fait partie d'un parc d'emplacements listés, comporte les casiers de dimension adaptés à la livraison, et si ces casiers en l'état sont appropriés en termes de conditions hygrométriques et thermiques. Uniquement une recherche de concordance entre la teneur de la livraison et les caractéristiques en l'état des divers casiers existants est prévue.

Cette recherche est effectuée en fonction des seuls impératifs d'encombrement, hygrométriques et thermiques de la livraison et parmi des caractéristiques correspondantes de casiers qui sont immuables et prédéterminées pour chaque casier du parc.

Le document US2015186840 décrit un agencement intelligent de casiers, commandé électroniquement par communication informatique. Le choix entre trois dimensions prédéterminées et immuables de casiers est automatiquement effectué pour correspondre à tel ou tel article de la livraison.

Certains casiers sont climatisés, systématiquement et en permanence durant leur réception d'articles périssables. Lés caractéristiques hygrométriques et thermiques d'entreposage de chaque casier sont immuables et prédéterminées.

Le document US2015120601 décrit un agencement sécurisé de livraison de colis, à contrôle électronique. En alternative aux boîtes aux lettres ou cases à casiers électroniques groupées en cabinets, des casiers de diverses dimensions sont contrôlés par l'intermédiaire de communications sans fil et sont implantés à l'intérieur de constructions fixes existantes comme des lieux publics ou des commerces.

Le document LV14447 décrit une station-service transportable, qui peut être déplacée comme une unité technique comprenant un camion conventionnel et stationnée à un endroit voulu. La station-service transportable comporte un module à citerne inclut dans un cadre en métal de la taille d'un conteneur marin, en forme de parallélépipède rectangle, et pourvu d'un système de remplissage, d'un compteur et de mécanismes de facturation en libre-service, d'un moniteur d'affichage, d'un dispositif d'encaissement, d'un lecteur de carte électronique, d'une connexion à Internet, d'un dispositif de calcul et de saisie de données.

Le document US3540173 décrit un bâtiment formé de conteneurs, de type préfabriqués, transportables et expansibles. Les conteneurs sont d'un format marin standard, et sont articulés les uns aux autres pour former le bâtiment. Les principaux aménagements sont opérés après la formation du bâtiment.

Les techniques connues présentent des qualités, mais à ce jour certains problèmes techniques restent néanmoins irrésolus.

Depuis quelques années, les modes classiques de distribution de colis connaissent un développement conséquent.

Par exemple en France, quatre réseaux de distribution de colis se partagent l'essentiel du marché. La généralisation des achats en ligne, i.e. la vente par correspondance où les achats sont effectués par l'intermédiaire de réseaux de communication informatiques dont Internet, ont entraîné un accroissement du nombre de colis à livrer.

L'alternative des points-colis présente des avantages, mais le destinataire doit se rendre physiquement au points-colis, pendant ses horaires d'ouverture. En bref, un point-colis est un commerçant qui se rend disponible pour recevoir et garder des colis, en échange d'une rémunération. Le destinataire peut venir retirer son colis chez ce commerçant, durant ses horaires d'ouverture.

Pour certains destinataires, notamment du fait de leur emploi du temps, de leurs moyens de transport ou de leurs obligations journalières, ni une livraison à domicile, ni une livraison hors domicile (par exemple sur un lieu de travail), ni encore un retrait en points-colis n'est possible. Par suite, c'est principalement d'une clientèle citadine et active qui choisit la technique du point-colis.

Cependant, un point-colis doit offrir des horaires adaptés aux clients désireux de récupérer leurs colis. Egalement, les points-colis requièrent une grande adaptabitité du commerçant qui doit être disponible pour la gestion des colis.

Ceci peut être problématique pour l'organisation du commerçant, notamment en termes de rémunération du temps consacré. De plus, pour de nombreux points-colis, la capacité de réception en termes de nombre et encombrement des colis est limitée. En outre, les points-colis ne permettent généralement que le retrait de colis secs et non ou peu périssables.

Il en va sensiblement de même pour les casiers automatiques extérieurs.

La technique du retrait automobile ou drive présente également des limitations. En général, les horaires d'ouvertures d'un retrait automobile correspondent à ceux du commerce de grande distribution dont ce « drive » dépend. Par suite, un retrait automobile ne propose que des horaires restreints d'ouverture, certains jours de la semaine seulement.

Une autre limitation est que l'activité des retraits automobiles est saisonnière. Elle est faible en période estivale, notamment en raison du déplacement en villégiature hors de leurs lieux usuels d'habitation et de travail, par exemple des familles avec de jeunes enfants. L'activité des retraits automobiles est aussi affectée durant la fin d'année, vraisemblablement par une plus grande nécessité de choisir de visu les produits prévus pour les fêtes et de les acheter en magasin.

De fait, les investissements importants nécessaires à ces retraits automobiles ne sont pas pleinement exploités durant l'année. Ceci impose en outre des variations complexes de ressources humaines allouées aux retraits automobiles. S'agissant de constructions à fondations et complexes à démonter, il n'est pas possible de déplacer des retraits automobiles peu usités à d'autres emplacements, où les besoins sont plus importants.

Egalement, à l'instar des casiers automatiques extérieurs, ces retraits automobiles ne sont pas propices à l'offre de services complémentaires destinés aux clients.

Pour les retraits automobiles ou les points-colis, le respect de la logistique de la chaîne de température impose, pour les produits frais, cuisinés chauds prêts-à-consommer ou surgelés, des contraintes non négligeables au commerçant qui doit assurer la mise à disposition du client des produits commandés, juste à temps mais sans devoir occuper d'importants moyens de réfrigération / chauffage propres au point d'enlèvement. Ceci est coûteux en temps, en moyens immobilisés et en main-d'oeuvre.

Pour la personne réceptrice, une fois les produits frais, cuisinés ou surgelés retirés à un retrait automobile, ces produits doivent rapidement être sortis de son véhicule et entreposés dans un lieu correctement réfrigéré. Par suite, il n'est pas envisageable de retirer le matin des produits frais / surgelés, de passer une journée au travail avec ces produits dans le véhicule, puis de ne rentrer que 8 à 10 heures plus tard pour sortir ces produits de son véhicule et les entreposer dans un lieu correctement réfrigéré e.g. à son domicile.

Il existe donc une forte demande pour la mise à disposition de colis accessibles sur des plages horaires plus étendues, voire permanentes, indépendamment de l'ouverture d'une institution / d'un commerce attenant, mais aussi à une proximité plus rapprochée des lieux de vie des personnes réceptrices.

De plus, notamment dans les localisations éloignées des centres urbains, les possibilités actuelles de mise à disposition de colis ou articles sont limitées, coûteuses à mettre en place et à maintenir, et n'offrent qu'une palette restreinte de services, outre le retrait voire le retour de produits dans le cas des points-colis ou casiers extérieurs.

En particulier, la mise à disposition de produits nécessitant des conditions dédiées d'entreposage notamment en termes de température, d'aération et d'hygrométrie, n'est pas proposée à l'heure actuelle.

En conclusion, les divers modes classiques de mise à disposition / livraison arrivent à saturation. Les techniques actuelles ne répondent pas à tous les besoins matériels courants pour de nombreuses personnes.

Les acteurs professionnels de ce secteur sont confrontés à des difficultés consistantes.

Ainsi, ces modes classiques de mise à disposition ne permettent pas d'adapter les moyens d'entreposage aux fortes variations quantitatives des commandes. Par exemple, lors des fêtes de fin d'année, la demande de mise à disposition dépasse l'offre disponible, ce qui peut entraîner des retards ou dysfonctionnements.

Aussi, il existe un besoin concret pour une technique de mise à disposition d'articles acquis, qui palie les inconvénients évoqués, tout en offrant de nouvelles possibilités aux acteurs de ce domaine ainsi qu'à ses usagers.

Typiquement, il serait souhaitable de permettre à une personne réceptrice de récupérer à un emplacement de proximité proche de son habitation, de son travail ou d'un autre endroit couramment fréquenté comme le parking ouvert d'un commerce ou la bordure d'une voirie publique, des articles achetés en ligne, et cela avec une grande amplitude horaire de retrait de ces articles.

Il serait parfois utile qu'une même construction fixe de mise à disposition soit fédérée sans forcément être la propriété d'un enseigne unique. Par exemple, des communes reculées, des groupements de commerçants, des associations ou instances publiques, pourraient disposer et partager une ou plusieurs constructions fixes, placées à proximité ou rapidement accessibles par des bénéficiaires. Par exemple, des personnes âgées ou à mobilité restreinte pourraient retirer facilement divers articles, et ce de façon groupée et si nécessaire, plusieurs fois par semaine.

Ces articles acquis peuvent comporter des produits réchauffés, des produits à température ambiante, des produits frais, des produits alimentaires fragiles (vins, mets délicats, etc.) ou des produits surgelés, notamment. D'autres produits comme des médicaments, des accessoires thérapeutiques (articles ophtalmologiques notamment) ou paramédicaux, des documents imprimés, des produits d'entretien ou chimiques (bouteilles de gaz, par exemple), des supports informatiques, des biens culturels ou analogues, voire des articles vivants comme des plantes ou des animaux, sont ici à considérer comme des articles dits acquis c'est-à-dire pouvant être mis à disposition selon l'invention.

Dans bien des cas, il serait également fort utile que le ou des articles non retirés puissent être retournés vers leur fournisseur, par exemple dans le cadre d'une tournée de chargement de casiers selon l'invention, afin que ces articles ne restent qu'une durée prédéterminée dans ces casiers ou puissent être renvoyés en cas de non retrait ou refus de la personne à qui ces articles étaient destinés.

En outre, l'invention devrait pouvoir offrir un local modulaire et transférable d'un point à un autre e.g. en cas d'implantation inappropriée. L'invention devrait également offrir une garantie de sécurité qui permet aux seules personnes autorisées, d'avoir accès aux articles acquis.

L'invention devrait en outre offrir un délai large de retrait et permettre plusieurs approvisionnements en articles par jour.

De fait, il serait utile que l'invention présente au moins certains des avantages suivants:
- Proche du consommateur,
- Gain de temps pour faire ses achats et retraits,
- Longuement accessible, par exemple 24h/24h et 7j/7,
- Offrir une image dynamique aux commerçants recourant au service de mise à disposition selon l'invention,
- Géolocalisation,
- Constructions renforçant sa communication,
- services complémentaires à la mise à disposition, et,
- Implantation dans des zones géographiques non couvertes ou trop reculées, d'où meilleure visibilité des enseignes des commerçants recourant au service de mise à disposition selon l'invention.

A cet effet, un objet de l'invention vise un procédé de contrôle d'une structure logistique de mise à la disposition d'une personne réceptrice, d'au moins un article acquis et commandé.

Le procédé comporte par exemple des étapes exécutées automatiquement par traitement informatique effectué par un système informatisé auquel la structure logistique est interconnectée. La structure logistique comporte une construction fixe, prévue pour abriter la personne réceptrice, à l'intérieur de laquelle sont agencés des casiers à verrou, chacun pourvu d'un dispositif de fermeture / ouverture piloté par le système informatisé. Ce système informatisé associe à chaque article acquis une typologie d'exigence de conservation propre.

Selon un exemple:
- plusieurs casiers à verrou de la construction fixe présentent chacun au moins deux propriétés d'entreposage choisies entre : propriété d'entreposage rafraichi et propriété d'entreposage frigorifique. Chaque propriété d'entreposage est activable ou désactivable de manière temporisée lors d'une étape de configuration de la structure logistique pour une mise à disposition donnée.

Dès lors :
- en cas de commande d'un article acquis, le procédé opère une étape d'examen de corrélation qui recherche si la typologie d'exigence de conservation associée à chaque article acquis et commandé est en adéquation avec l'une des propriétés d'entreposages d'au moins un casier à verrou, et,
- une étape d'ordonnancement du procédé associe un horaire de mise à disposition de l'article acquis dans la construction fixe, fait correspondre cet horaire à un créneau de mise en marche lors de laquelle la propriété d'entreposage en corrélation est activée et programme pour cet horaire le dispositif de fermeture / ouverture.

Selon un exemple, le procédé comporte une étape de transport d'une construction fixe de type préfabriquée en usine et prête à l'emploi, et une étape d'installation de la construction à un emplacement de destination. L'emplacement de destination possède un accès libre depuis une voie publique ou via un espace dans lequel la personne réceptrice peut pénétrer à l'envie. Alors, l'étape d'installation est suivie d'une étape de raccordement fonctionnel de la construction au sein de la structure logistique.

Selon un exemple, le procédé comporte au moins une étape de commande de l'article et une étape de pré paiement de l'article; au moins l'une des étapes de commande et de pré paiement de l'article est opérée par un intermédiaire choisi parmi : vente par correspondance, transaction électronique en ligne et commande à un guichet d'accueil physique.

Selon un exemple, l'intérieur de la construction fixe comporte au moins une interface homme-machine de mise à disposition, qui fait partie du système informatisé. Chaque casier à verrou est pourvu d'un dispositif de fermeture piloté par le système informatisé, tel que chaque casier où est entreposé un article acquis est verrouillé suite à une étape de chargement. Le procédé comprend lors d'une étape de retrait, i.e. de collecte de l'article acquis par la personne réceptrice, une phase d'autorisation d'accès au casier à verrou lors de laquelle l'interface homme-machine est opérée par la personne réceptrice de façon à autoriser la cessation d'un verrouillage par le dispositif de fermeture / ouverture.

Selon un exemple, le système informatisé associe à chaque article acquis un gabarit logique préenregistré propre et possède en mémoire un encombrement interne propre à chaque casier à verrou; l'étape d'examen de corrélation comportant une sélection d'au moins un casier à verrou dont l'encombrement interne coïncide avec le gabarit logique de chaque article acquis commandé, afin que l'article soit placé dans ce casier lors d'une étape de chargement.

On comprend que le gabarit logique préenregistré, la propriété d'entreposage et d'autres paramètres propres à un article donné, font partie de la typologie d'exigence de conservation de cet article.

Selon un exemple, plusieurs casiers à verrou sont de type climatisés et présentent chacun au moins trois propriétés d'entreposage parmi : propriété d'entreposage sec tempéré, propriété d'entreposage ventilé, propriété d'entreposage rafraichi, propriété d'entreposage frigorifique, propriété d'entreposage réchauffé et/ou propriété d'entreposage illuminé chaque propriété d'entreposage est activable et désactivable à la demande, à distance et de manière temporisée lors de l'étape d'ordonnancement ; une propriété d'entreposage activée est désactivée de manière temporisée lors d'une étape de retrait par la personne réceptrice.

On comprend que pour un entreposage approprié à certains articles, plusieurs propriétés d'entreposage peuvent être actionnées simultanément selon l'invention.

Selon un exemple, plusieurs casiers à verrou ayant la même propriété d'entreposage à activer lors de l'étape d'ordonnancement sont déterminés automatiquement par le système informatisé lors de l'étape d'ordonnancement, de façon à être mitoyens au sein de la construction fixe.

Dans le même ordre d'idées, des exemples prévoient de regrouper dans un seul casier à verrou lors des étapes d'ordonnancement et / ou de coordination, plusieurs articles d'une même et unique commande, donc destinés à la même personne réceptrice, à condition que ces articles présentent des propriétés d'entreposage compatibles, concordantes voire identiques, et dans la mesure où le système informatisé détermine qu'un encombrement interne de ce casier à verrou englobe la somme de chaque gabarit logique de ces articles.

Selon un exemple, l'horaire de mise à disposition de l'article acquis qui correspond au créneau de mise en marche est choisi parmi les périodes suivantes : de 20 heures à 24 heures par jour, de 6 à 7 jours par semaine, de 313 jours à 365 jours par an.

Classiquement, les périodes auxquelles une construction fixe et les casiers à verrou s'y trouvant sont rendus accessibles sont décidées et ajustées au fil des semaines et mois, par l'administrateur du système informatique, par exemple une enseigne de grande distribution, une fédération de commerçants ou un groupement d'intérêt local.

Selon un exemple, le procédé prévoit successivement au moins:
- une étape de transport,
- une étape d'installation,
- une étape de raccordement fonctionnel, pour rendre opérationnelle une construction fixe de type préfabriquée en usine et prête à l'emploi,
   puis, une fois la construction fixe opérationnelle, lors d'une commande, le procédé exécute successivement et au moins en partie automatiquement au moins:
- une étape d'examen de corrélation,
- une étape d'ordonnancement,
- une étape de configuration,
- une étape de chargement, en partie opérée manuellement par une personne dite agent,
- une phase d'autorisation d'accès, et,
- une étape de retrait ou collecte en partie opérée manuellement par la personne réceptrice.

Dans des réalisations, les étapes de transport, d'installation, de raccordement fonctionnel et de chargement nécessitent une intervention humaine, voire sont entièrement opérées de façon manuelle.

A l'inverse, d'autres étapes du procédé de mise à disposition sont opérées automatiquement en fonction des commandes administrées, comme les étapes d'examen de corrélation, d'ordonnancement, de configuration et d'autorisation de l'ouverture de casiers à verrou.

Selon un exemple du procédé de l'invention, le système informatisé comporte un ordinateur avec au moins: un processeur, des zones mémoires, des interfaces de communication et des programmes aptes à exécuter des instructions pour que l'ordinateur opère des traitements locaux et à distance, d'automatisation d'étapes du procédé.

Dans des réalisations de l'invention, les données utiles au procédé telles que les codes d'accès aux casiers, les plages horaires, le gabarit logique préenregistré, la propriété d'entreposage et d'autres paramètres propres à un article donné, sont enregistrées dans de telles zones mémoires du système informatisé, typiquement au sein de bases de données.

Des traitements en bon nombre automatisés, sont opérés à partir de données issues d'un appareil de transmission d'informations employé par la personne réceptrice.

Des éléments d'information de la commande sont alors échangées entre l'appareil et des zones mémoire accessibles depuis la construction fixe, pour subir une authentification de cet appareil et / ou de la commande et / ou de la personne réceptrice. Puis pour encrypter les éléments d'information afin de les rendre confidentielles.

Selon un exemple, les casiers à verrou présentant au moins deux propriétés d'entreposage comportent chacun au moins un capteur de présence du ou des articles entreposés.

Ce capteur de présence est en liaison logique avec le système informatisé. De la sorte, suite à une activation d'une (ou de plusieurs) propriété d'entreposage et suite à l'étape de chargement du ou des articles entreposés dans un casier à verrou donné, tant que le capteur de présence correspondant indique au système informatisé que le ou les articles sont toujours présents dans ce casier à verrou donné, cette propriété d'entreposage activée est maintenue.

Dans des réalisations, un pareil capteur de présence comporte au moins un agencement de type détecteur de volume, senseur de mouvements, capteur de position d'une articulation de porte du casier, et souvent un instrument de pesée, couplé à un plateau guidé au dessus d'un fond d'un espace d'entreposage du casier et sensible à une masse de tout article posé sur ce plateau guidé.

Selon un exemple où un capteur de présence est prévu, une temporisation avant possible coupure du maintien de la propriété d'entreposage activée est enclenchée lorsque ce capteur de présence correspondant indique au système informatisé que le ou les articles ne sont plus présents dans ce casier à verrou donné et que le dispositif de fermeture / ouverture du casier à verrou donné indique au système informatisé que l'une porte d'accès a été ouverte.

Pour des raisons de sécurité, selon un exemple où un capteur de présence sous forme d'instrument de pesée est prévu, le procédé de contrôle peut vérifier la concordance - avec une marge de précision prédéterminée, au besoin - entre un résultat de mesure de poids opéré par un capteur de présence suite à l'étape de chargement, avec une valeur massique propre à chaque article chargé dans le casier à verrou.

Dans une réalisation, en cas de non-concordance entre ce résultat de mesure de poids et la valeur massique propre à chaque article chargé, diverses procédures de sécurité peuvent être automatiquement déclenchées par le système informatisé: blocage de la fermeture du casier jusqu'à acquittement, alarme sonore / visuelle / à distance, ou analogues.

A l'inverse, dans une réalisation, si une concordance entre ce résultat de mesure de poids et la valeur massique propre à chaque article chargé est constatée par le système informatisé, et que ce système détecte par exemple un déverrouillage autorisé d'un verrou de casier et une ouverture de ce dernier, une coupure de la ou des propriétés d'entreposage est commandée.

Un autre objet de l'invention vise une structure logistique de mise à la disposition d'une personne réceptrice, d'au moins un article acquis commandé e.g. via une vente par correspondance.

Comme on l'a vu, la structure logistique comprend un système informatisé auquel la structure logistique est interconnectée pour exécuter automatiquement des traitements informatiques de contrôle. Cette structure logistique comporte une construction fixe, prévue pour abriter la personne réceptrice, à l'intérieur de laquelle sont agencés des casiers à verrou. Chaque casier à verrou est pourvu d'un dispositif de fermeture / ouverture piloté par le système informatisé. Le système informatisé associe à chaque article acquis, notamment une typologie d'exigence de conservation propre.

Selon un exemple de la structure selon l'invention, celle-ci comporte:
- plusieurs casiers à verrou de la construction fixe présentent chacun au moins deux propriétés d'entreposage choisies entre : propriété d'entreposage sec tempéré, propriété d'entreposage rafraichie et / ou propriété d'entreposage frigorifique; chaque propriété d'entreposage étant activable ou désactivable de manière temporisée lors d'une étape de configuration de la structure logistique pour une mise à disposition donnée,
- le système informatisé étant agencé pour qu'en cas de commande d'un article acquis, soit opérée une étape d'examen de corrélation qui recherche si la typologie d'exigence de conservation associée à chaque article acquis commandé est en adéquation avec l'une des propriétés d'entreposages d'au moins un casier à verrou, de sorte qu'à une étape d'ordonnancement, le système informatisé associe un horaire de mise à disposition de l'article acquis dans la construction fixe, fait correspondre cet horaire à un créneau de mise en marche lors de laquelle la propriété d'entreposage en corrélation est activée et programme pour cet horaire le dispositif de fermeture / ouverture.

Selon un exemple, la construction fixe est de type préfabriquée en usine et prête à l'emploi, et l'emplacement de destination possède un accès libre depuis une voie publique ou via un espace dans lequel la personne réceptrice peut pénétrer à l'envie.

Selon un exemple, plusieurs casiers à verrou sont de type climatisés et présentent chacun au moins trois propriétés d'entreposage dont une propriété d'entreposage sec tempéré, une propriété d'entreposage rafraichie et une propriété d'entreposage frigorifique; chaque propriété d'entreposage est activable et désactivable à la demande et de manière temporisée lors de l'étape d'ordonnancement ; une propriété d'entreposage activée est désactivée de manière temporisée lors d'une étape de retrait par la personne réceptrice.

Avec l'invention, il est possible que la mise à disposition soit localisée à proximité d'un lieu de passage fréquent pour une personne et soit telle que les articles acquis sont entreposés de manière appropriée à leurs propriétés, tout en étant rendus disponibles sur une longue période de temps. De la sorte, le retrait de ces articles peut grâce à l'invention, être opéré à un moment librement choisi et sans nécessiter de prise de rendez-vous ou la présence d'un employé de livraison.

L'invention et ses avantages apparaîtront avec plus de détails dans le cadre de la description qui suit avec des exemples de réalisation donnés à titre d'illustration seulement et se référant aux dessins annexées. Les dessins comportent:
la figure 1 qui est une vue schématique et synoptique de structures, systèmes et procédés selon l'invention,
la figure 2 est une vue schématique en plan de dessus, d'une construction fixe et habitable conforme à l'invention,
la figure 3 est un graphique séquentiel décrivant les principales étapes et phases d'un exemple de procédé de mise à disposition confirme à l'invention, et
la figure 4 est une vue schématique en perspective de face et de dessus, d'un casier à verrou conforme à un exemple de réalisation de l'invention, de type unité autonome de production à la demande d'entreposage sécurisé sec, froid et froid négatif, notamment.

Les éléments présents dans plusieurs figures distinctes sont affectés d'une seule et même référence.

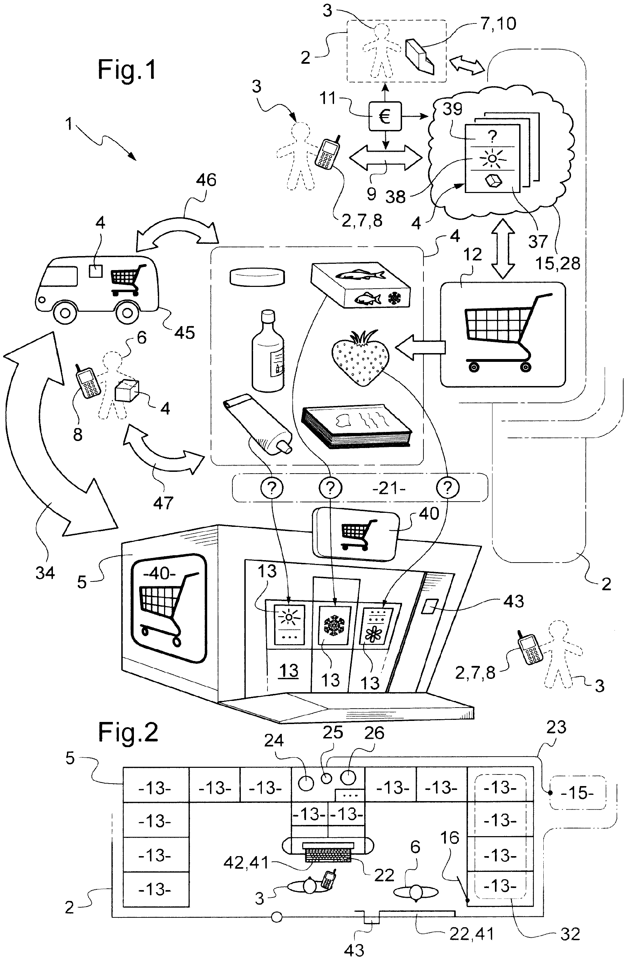

Sur la figure 1, la référence 1 désigne de manière générale un procédé de contrôle. La référence numérique 2 désigne une structure logistique. Ce procédé 1 et la structure logistique 2 conformes à l'invention visent la mise à la disposition d'une personne réceptrice 3, d'au moins un article acquis 4 qui a été préalablement commandé.

Dans un exemple de la figure 1, c'est la même personne 3 humaine qui opère la commande des articles 4 et qui en opère le retrait auprès d'une construction fixe 5 faisant elle-même partie de la structure logistique 2.

Il va de soi que dans nombre de cas, la personne réceptrice 3 est distincte de la personne opérant la commande des articles 4 ensuite mis à disposition.

Dans un exemple, la personne réceptrice 3 est un ayant droit qui dispose des codes et identifiants d'accès aux articles 4, par exemple une aide à domicile au service d'une personne âgée, à mobilité réduite ou isolée.

En outre, il convient de distinguer la ou les personnes 3 qui sont les bénéficiaires de l'invention, au sens où ces personnes réceptrices 3 opèrent le retrait des articles acquis 4, d'autres personnes humaine désignées en 6 sur les figures 1 et 2.

Ces personnes humaine 6 sont des opérateurs, qui typiquement travaillent au sein de ou pour la structure logistique 2, par exemple en tant qu'administrateur de commande, de gestionnaire de manutention comme sur la figure 1, ou d'opérateur d'entretien comme sur la figure 2.

En préalable également, précisons divers modes de passage de commande du ou des articles acquis 4. Chacun des articles acquis 4 est choisi via une interface de commande 7. Cette interface de commande 7 est par exemple un ordinateur connecté 8, par exemple portable ou de bureau, et la commande 9 opère e.g. pour la personne 3, une vente par correspondance.

Dans un autre exemple de la figure 1, l'interface de commande 7 est un guichet physique 10 ou point de vente auquel la personne 3 se rend physiquement, tel que la caisse d'un magasin, une borne informatique de vente. C'est à ce guichet physique 10 que la commande 9 est opérée directement sur place pour la personne 3. On remarque que l'interface de commande 7 fait partie physiquement de la structure logistique 2.

Sur la figure 1, on voit qu'une étape de payement 11 valide dans certains cas, la commande 9.

Mais dans certaines réalisations de l'invention, la commande 9 n'est pas d'ordre lucratif.

Ainsi, la commande 9 est dans un exemple une réservation d'un ou plusieurs articles 4 sous forme de document culturel auprès d'une médiathèque. Dans d'autres exemples, la commande 9 est une analyse médicale et l'article 4 mis à disposition forme les résultats de cette analyse. Dans encore un autre exemple, la commande 9 est une consultation médicale et l'article 4 forme un produit ou accessoire médical ou paramédical prescrit lors de la consultation, comme des médicaments, des lunettes ophtalmologiques ou un appareil d'assistance à la marche ou à la respiration. Dans d'autres exemples, la commande 9 est une démarche administrative, et l'article un document officiel. De ce qui précède, il apparaît que la commande 9 n'est pas obligatoirement mercantile.

Sur la figure 1, on voit aussi que divers types d'articles acquis 4 peuvent être mis à disposition d'une personne réceptrice 3, selon l'invention.

Notamment, les articles 4 sont commandés divers : des produits réchauffés, en particulier des plats cuisinés prêts à déguster des produits à température ambiante comme des consommables ménagers, des produits frais tels que des fruits ou légumes, des produits alimentaires à conserver en ambiance réfrigérée comme viande, laitages, poissons, des produits alimentaires fragiles (vins, mets délicats, etc.), des produits précieux (montres, équipement électronique, bijoux, lunettes), des produits surgelés, des produits médicaux, des accessoires thérapeutiques (articles ophtalmologiques notamment) ou des produits paramédicaux, des documents imprimés comme des tickets d'évènement culturel ou sportif, des certificats administratifs ou résultats médicaux, des livres ou revues, des produits d'entretien ou chimiques (bouteilles de gaz, par exemple), des supports informatiques, des biens culturels ou analogues, voire des articles 4 vivants comme des plantes ou des animaux.

Grâce à l'invention, quasiment tout type d'article acquis 4 peut être mis à disposition d'une personne réceptrice 3.

Dans l'exemple de la figure 1 ou 2, la structure logistique 2 intègre une seule construction fixe 5 qui est distincte, ici totalement séparée de l'infrastructure de commande 7, par exemple d'un point de vente ou d'un lieu 12 où sont stockés le ou les articles 4 de la commande.

Dans d'autres exemples, la structure logistique 2 intègre plusieurs constructions fixes 5. Egalement, selon des réalisations, la ou les constructions fixes 5 de la structure logistique 2 sont mitoyennes d'un point de vente ou d'un lieu 12.

Par exemple, une ou plusieurs constructions fixes 5 sont installées sur le terrain d'un point de vente ou d'un lieu d'échange 12, par exemple sur le terrain d'une station service, d'une gare, d'un pôle de transport, à un emplacement public de proximité proche d'habitations, de lieux de travail ou d'un autre endroit couramment fréquenté comme un parking ouvert ou à la bordure d'une voirie publique.

Sur la figure 1, la construction 5 est un local modulaire de 10-20m². Dans ce cas, la construction fixe 5 de mise à disposition n'est évidemment par soumises aux règlements et contraintes administratives ou légales propres aux infrastructures de commande telles que les magasins.

Une telle construction fixe 5 qui fait partie de la structure physique 2 est à fins principalement logistique et constitue le lieu de la mise à disposition des articles 4. Sur la figure 1, cette construction 5 est préfabriquée en usine où elle est rendue prête à l'emploi.

De telles constructions fixes 5 sont de type habitables, propres à être à installées à un emplacement de destination, et sont donc transportables. Ces constructions 5 forment ici des bâtiments dont au moins un espace intérieur est agencé pour la réception de personnes 3 ou 6, d'installations dont les casiers 13 et de biens dont les articles acquis 4, évidemment.

Ainsi, des constructions fixes 5 selon une réalisation de l'invention sont prêtes à l'emploi sont obtenues par conception assistée par ordinateur (CAO). Ces constructions fixes 5 permettent une prévisualisation avant mise en production en usine. Un aménagement extérieur de la construction 5 et un agencement interne (mobilier, décoration, équipements techniques) sont choisis et ajustés au fur et à mesure de la production en usine de ces constructions 5.

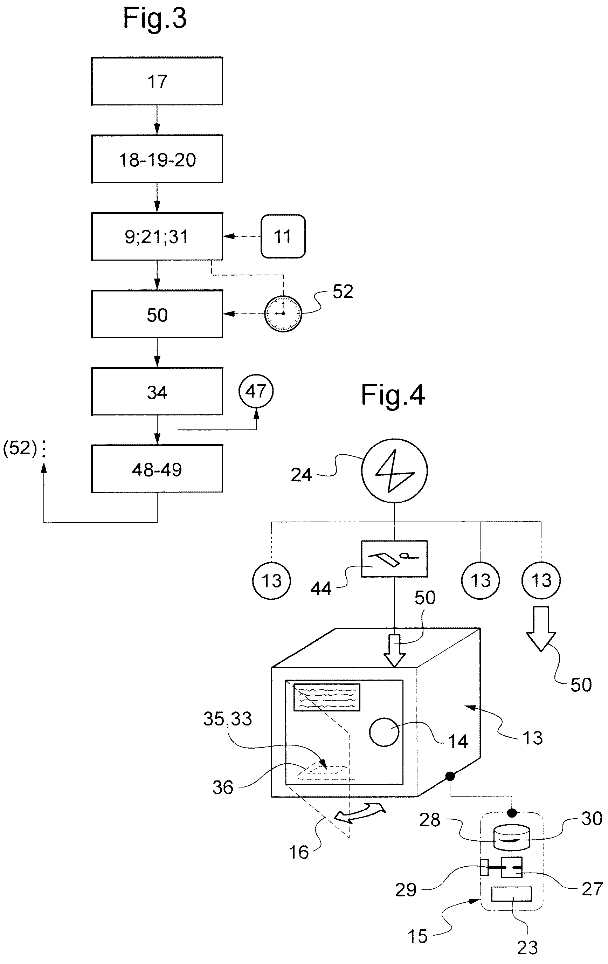

En bref, la conception en 3D des constructions 5 puis une préfabrication en usine 17 (figure 3) selon l'invention, permet la perception des volumes intérieurs / extérieurs et ainsi une parfaite insertion dans le site d'installation future. En usine sont opérés, par exemple avec une production assistée par ordinateur (PAO), des opérations de :
Montage de murs e.g. à ossature bois de constructions 5 selon l'invention avec finitions intérieures et extérieures sur un cadre prismatique e.g. en métal,
Montage de cloisons intérieures le cas échéant,
Fabrication sur mesure des éléments de mobilier, rangement et décoration, dont des casiers à verrou 13 et une ou plusieurs interfaces homme-machine 22, et,
Agencement de l'intérieur de la construction 5 (au besoin : meubles, sanitaires, luminaires encastrés, équipements électroménager...).

Par suite, une fois ces opérations achevées, chaque construction 5 selon l'invention n'a plus qu'à être déplacée à l'emplacement de destination lors d'une étape de transport 18, livrée lors d'une étape d'installation 19, et ensuite simplement raccordée et connectée lors d'une étape de raccordement fonctionnel 20. De fait, la construction fixe 5 est immédiatement opérationnelle.

Dans l'exemple de la figure 1, on comprend que l'étape de raccordement fonctionnel 20 prévoit notamment la connexion logique au système informatisé 15 par un réseau de communication 23, le raccord au secteur électrique par un point de branchement 24, le raccordement à un réseau d'alimentation en eau par une colonne centralisée 25 et le branchement à une évacuation d'eaux usées par un collecteur unique 26.

Un avantage notable de telles constructions fixes 5 préfabriquées est que celles-ci sont transférables d'un point à un autre en cas de problème d'implantation.

Sur la figure 1 ou 2 on voit qu'à l'intérieur de la construction fixe 5 prévue pour abriter la personne réceptrice 3, sont agencés plusieurs casiers à verrou 13. Par exemple, une structure 5 de 10-20m2 permet d'accommoder plus de 50 casiers, à verrou 13.

Sur la figure 2, les casiers 13 sont agencés horizontalement suivant un plan en « E ». Verticalement, pour des casiers 13 de grande hauteur, le casier occupe en élévation toute la face de l'agencement de casiers. Pour des casiers 13 de hauteur moyenne, deux, trois ou quatre casiers 13 occupent respectivement la moitié le tiers ou le quart en élévation de la hauteur d'ensemble de l'agencement de casiers. Horizontalement, diverses largeurs de casiers 13 sont prévues.

Chacun de ces casiers à verrou 13 est pourvu d'un dispositif 14 de fermeture / ouverture piloté par un système informatisé 15 et d'une une porte d'accès 16. Ce système informatisé 15 fait partie de la structure 2.

Selon une réalisation de l'invention (cf. figure 4), le système informatisé 15 comporte un ordinateur d'administration 23 avec au moins : un processeur, 27, des zones mémoires 28, des interfaces de communication 29 et des programmes 30 aptes à exécuter des instructions codées.

Ces instructions permettent à l'ordinateur 23 d'opérer des traitements locaux et à distance, notamment pour automatiser certaines étapes du procédé 1 de l'invention.

Certains de ces traitements sont opérés à partir de données issues d'une l'interface de commande 7 employée par une personne 3 passant commande puis par la personne réceptrice par exemple à l'aide la aussi d'un ordinateur connecté 8 ou via l'interface 22.

Ces informations sont échangées entre l'appareil et une vers une plateforme telle que l'ordinateur d'administration 23. La plateforme sert à l'enregistrement dans des zones mémoire 28 accessibles depuis la construction fixe 5, après calcul local, d'éléments d'information de la commande 9.

Un autre aspect de l'invention concerne les casiers à verrou 13.

Selon un exemple de structure 2 selon l'invention, plusieurs casiers à verrou 13 dans la construction fixe 5 présentent chacun au moins deux propriétés d'entreposage choisies entre : propriété d'entreposage sec tempéré, propriété d'entreposage rafraichie et / ou propriété d'entreposage frigorifique.

Chaque propriété d'entreposage est activable ou désactivable de manière temporisée lors d'une étape de configuration 21 de la structure logistique 2 pour la mise à disposition d'un article 4 donné.

Selon un exemple, plusieurs casiers à verrou 13 sont chacun un ensemble autonome, ayant sa propre commande 44 de pilotage des fonctions en accord avec telle ou telle propriété d'entreposage des articles 4, une alimentation en énergie électrique 24 dédiée, et aussi des moyens intégrés de mise en oeuvre de plusieurs fonctions de production de propriétés d'entreposage. Dans nombre de réalisations, chaque casier 13 est identifié par exemple par un numéro dédié apposé sur la porte 16.

Certains de ces casiers à verrou 13 sont de type climatisés et présentent chacun au moins trois propriétés d'entreposage dont une propriété d'entreposage sec tempéré, une propriété d'entreposage rafraichie et une propriété d'entreposage frigorifique. Chaque propriété d'entreposage est activable et désactivable à la demande et de manière temporisée lors de l'étape d'ordonnancement 31 expliquée plus loin.

Au moins une propriété d'entreposage activée est désactivée de manière temporisée lors du retrait du ou des articles acquis 4, par la personne réceptrice 3. Par exemple, au retrait d'articles 4 surgelés, la fonction frigorifique de congélation est coupée, mais une fonction de ventilation est temporairement maintenue. Similairement, une fonction d'éclairage peut être momentanément maintenue, après le retrait.

Dans une réalisation, un ensemble 32 (figure 2) de casiers 13 sont compatibles SEC (0°C), FROID (5°/6°C) et FROID NEGATIF (-18°C /-23°C). L'autorisation d'ouverture des casiers 13 est pilotée par l'interface 22 disposé à l'intérieur de la construction 5, et est aussi affichée sur un écran d'accueil par exemple tactile de cette interface 22.

Dés que les casiers 13 dédiés à la commande sont vidées par la personne réceptrice 3, un nouvel état « vide » est affiché sur l'écran, par exemple par un marquage de couleur, tel que « rouge » (lettre « R » dans le tableau) pour un casier 13 conditionné, chargé, fermé et verrouillé et « vert » (lettre « V » dans le tableau) pour un casier ouvert et vidé.

Un exemple d'affichage d'état de casiers 13, à l'attention de personnes réceptrices 3, est illustré par le tableau qui suit :

| | | MARQUE DISTRIBUTEUR | | | |
|---|---|---|---|---|---|
| CLIENT | ID;COMMANDE | LIVRAISON 1 | LIVRAISON 2 | LIVRAISON 3 | MESSAGES |
| ken | CD 262306 | V-10-4 | V-22-5 | R-31-22M | L3 IN 50MN |
| jack | CD 301218 | V-6,5,2-5 | R-18-0 | R-29-19M | L3 IN 50MN |
| dupont | CD 35641 | R-3-1 | R-15-4 | | COUPON DISPO |
| black | CD 31468 | V-5-1 | V-11-19M | R-32-21 M | L3 IN 50MN |
| bond | CD 00045 | V-1-M19 | | | HELLO BOND |

La personne 3 est identifiée sur la colonne 1, le numéro d'identifiant de chaque commande sur la colonne 2, et plusieurs livraisons possible (1, 2, 3 ...) sont renseignées avec dans l'exemple de la livraison 1 d'une commande CD 262306 pour la personne réceptrice 3 appelée « Ken », « V-10-4 » signifiant « V » pour « vert », « 10 » pour le numéro de casier et « 4 » pour la température. Par exemple, la livraison 3 prévoit « R-31-22M » car les articles destiné au casier 31 ne sont pas encore chargés, ceux-ci devant être maintenus à une propriété d'entreposage en température négative de -22°C correspondant à « 22M ».

Dans des réalisations, l'invention apporte une sécurité avancées à la structure logistique 2 avec une sécurisation des transactions entre la personne 3 et la construction fixe 5 ou plus généralement la structure informatisée 15, d'abord par authentification de l'interface 7 et / ou de la commande 9 et / ou de la personne réceptrice 3.

Puis l'invention encrypte dans cette réalisation, des éléments d'information des transactions afin de les rendre confidentielles. En synthèse, pour assurer cette sécurité, l'invention emploie d'une part une procédure d'authentification et d'autre part une procédure d'encryptions (confidentialité).

Un autre aspect de l'invention vise la détection de présence / absence du ou des articles 4 entreposés, à l'intérieur de chaque casier 13 à fonctions multiples modulables.

Ainsi, dans l'exemple de la figure 4, des casiers à verrou 13 comportent chacun au moins un capteur de présence 33 du ou des articles 4 entreposés.

Ce capteur de présence 33 est en liaison logique avec le système informatisé.15 De la sorte, suite à une activation d'une (ou de plusieurs) propriété d'entreposage et suite à l'étape de chargement 34 (figure 1) du ou des articles acquis 4 dans un casier à verrou 13 donné, tant que le capteur de présence 33 correspondant indique au système informatisé 15 que le ou les articles 4 sont toujours présents dans ce casier 13 donné, une ou plusieurs propriété d'entreposage activées pour l'étape de chargement 33, est par exemple maintenue.

Dans des réalisations, un pareil capteur de présence 33 comporte au moins un agencement de type :
- détecteur de volume,
- senseur de mouvements,
- capteur de position d'une articulation de la porte 16 du casier, et souvent
- un instrument de pesée 35, couplé à un plateau guidé 36 au dessus d'un fond d'un espace d'entreposage du casier 13 et sensible à une masse de tout article 4 posé sur ce plateau guidé 36.

Selon une réalisation de l'invention un capteur de présence 33 est couplé à une temporisation du système 15. Cette dernière temporise la possibilité d'une coupure du maintien d'une ou plusieurs propriétés d'entreposages activées préalablement en fonction du type d'article 4 dans un casier 13 donné. Cette temporisation est enclenchée lorsque ce capteur de présence 33 indique au système informatisé 15 que le ou les articles 4 ne sont plus présents dans ce casier 14 donné et que le dispositif de fermeture / ouverture 14 du casier 13 donné indique au système informatisé 15 que la porte d'accès 16 a été ouverte.

Pour des raisons de sécurité, selon un exemple où un capteur de présence 33 sous forme d'instrument de pesée 35 est prévu, le procédé de contrôle 1 peut vérifier la concordance - avec une marge de précision prédéterminée, au besoin - entre un résultat de mesure de poids opéré par un capteur de présence 35 suite à l'étape de chargement 34, avec une valeur massique propre à chaque article 4 chargé dans le casier à verrou 13 où se trouve le capteur 33.

Dans une réalisation, en cas de non-concordance entre ce résultat de mesure de poids et la valeur massique propre à chaque article 4 chargé, diverses procédures de sécurité sont automatiquement déclenchées par le système informatisé: 15, ici le blocage de la fermeture du casier 13 jusqu'à acquittement, une alarme sonore / visuelle / à distance, ou analogues.

A l'inverse, dans une réalisation, si une concordance entre ce résultat de mesure de poids et la valeur massique propre à chaque article 4 chargé est constatée par le système informatisé 15, et que ce système 15 détecte par exemple un déverrouillage autorisé d'un verrou 14 de casier et une ouverture de ce dernier, une coupure de la ou des propriétés d'entreposage est commandée.

On comprend que dans des exemples de l'invention, le système informatisé 15 garde en mémoire, par enregistrement dans une zone 28 par exemple, pour chaque article 4 pouvant être commandé, son gabarit logique 37, la température de conservation nominale 38, de l'article 4, et d'autres paramètres propres 39 à un article 4 donné.

Ce système informatisé 15 garde également en mémoire, par enregistrement dans une zone 28 par exemple, pour chaque casier 13, un encombrement interne propre à chaque casier à verrou 13, ses diverses fonctions disponibles de conservation, son état de chargement actuel, son numéro identifiant, etc.

Sur la construction de la figure 1, des espaces publicitaires 40 sont destinés prévus. Ces espaces 40 peuvent être achetés par une enseigne e.g. le commerce où la commande a été passée, d'autres fournisseurs de service ou à des institutions telles qu'une commune accueillant l'invention.

Dans la réalisation de la figure 2, l'interface homme-machine 22 forme des espaces publicitaires 40. Pour ce faire, l'interface homme-machine 22 est reliée au système 15, qui opère sur un écran d'affichage 41 la visualisation d'un message publicitaire.

Sur cette même figure 2, l'interface homme-machine 22 comporte un boitier de commande 42 intérieur, sous forme d'écran tactile, par la personne réceptrice 3 qui forme un écran d'accueil. Ce boitier de commande 42 permet à la personne réceptrice 3, e.g. par la saisie d'un code ou par une lecture de code ou «flash code» si l'interface 22 est équipée d'un capteur idoine, de s'identifier et de valider son accès aux casiers 13 qui lui sont dédiés.

Mais avant, puisque la construction 5 de figure 2, l'interface homme-machine 22 comporte un boitier de commande 43 externe, la saisie directe ou à distance d'un identifiant et / ou d'un mot de passe, autorise la personne réceptrice à d'entrer dans la construction 5. On verra plus loin qu'il s'agit d'une phase d'autorisation d'accès 48.

Une fois rentré, les coordonnées / identifiants de la personne réceptrice 3 sont affichés sur l'écran d'accueil de l'interface 22 et cette personne 3 peut alors commencer l'ouverture des casiers 13 dont les indications de reconnaissance (e.g. des numéros de casiers : 01, 02, ...52...) sont listées sur l'écran 41 pour récupérer les articles 4 de sa commande. On verra plus loin qu'il s'agit d'une étape de retrait 49.

L'interface homme-machine 22 selon l'invention comporte, dans la réalisation de la figure 2, un autre écran 41 dit métier. Selon cette réalisation, l'écran métier 41 est localisé à l'intérieur de la construction 5, pour un accès d'intervenants autorisés à pénétrer dans la construction 5. Selon d'autres réalisations, un écran métier 41 est localisé à l'extérieur de la construction 5.

Cet écran métier 41 est dédié aux personnes ou agents tels que livreurs et / ou techniciens, pour l'affichage sur l'écran métier 41 d'une visualisation complète des commandes en cours, tandis un technicien l'écran métier 41 affiche une visualisation des tâches d'entretien et de maintenance à régler ou déjà effectuées.

Avant de décrire des réalisations du procédé 1 selon l'invention, apportons encore quelques précisons structurelles.

Selon l'exemple de la figure 1, les articles 4 commandés et entreposés préalablement dans le lieu 12, font l'objet d'un transfert par la personne 6 opérant l'étape de chargement 34, depuis ce lieu 12 verts la construction fixe 5 appropriée.

A cette fin, les articles 4 sont collectés au sein du lieu 12 et déplacés dans une navette 45, ici sous la forme d'un véhicule automobile.

Cette opération dite étape de déplacement est référencée en 46. Une fois la navette 45 chargée avec les articles 4, et déplacée à proximité de la construction 5 à laquelle ces articles 4 sont destinés, après l'étape de déplacement 46, c'est l'étape de chargement 34 déjà évoquée qui est opérée par la personne 6.

Notons enfin que sur la figure 1, la flèche 47 illustre un retour produit, c'est-à-dire le renvoi vers son lieu 12 d'origine d'au moins un article 4, qui avait été précédemment placé dans un casier 13, mais qui pour une raison ou une autre, n'a pas été retiré par la personne réceptrice 3.

Maintenant, divers aspects du procédé 1 de l'invention sont évoqués, en se référant notamment à la figure 3.

Selon cet exemple, le procédé 1 de l'invention prévoit successivement au moins, suite à la préfabrication en usine 17 de la construction fixe 5:
- de l'étape de transport 18 de la construction fixe 5 sur son site de fonctionnement,
- de l'étape d'installation 19 sur site de cette construction fixe 5,
- de l'étape de raccordement fonctionnel 20, pour rendre opérationnelle la construction fixe 5.

Ces étapes 17-20 sont illustrées par l'exemple de la figure 3.

Le procédé 1 de l'exemple de la figure 1 comporte d'autres étapes exécutées automatiquement par traitement informatique effectué par le système informatisé 15 auquel la structure logistique 2 est interconnectée.

On a vu qu'à cette fin, la structure logistique 2 comporte une construction fixe 15, prévue pour abriter la personne réceptrice 3, à l'intérieur de laquelle sont agencés des casiers à verrou 13, chacun pourvu d'un dispositif de fermeture / ouverture 14 piloté par le système informatisé 15. Et que ce système informatisé 15 associe à chaque article acquis 4 une typologie d'exigence de conservation propre.

Selon l'exemple de la figure 3, on voit qu'une fois la construction fixe 5 opérationnelle, suite à une commande 9, le procédé 1 exécute successivement et au moins en partie automatiquement, au moins:
- une étape d'examen de corrélation 21 qui est détaillée plus loin,
- l'étape d'ordonnancement 31 déjà évoquée,
- une étape de configuration 50 de chaque casier 13 employé par la commande 9,
- l'étape de chargement 34, en partie opérée manuellement par une personne 6 dite agent,
- la phase d'autorisation d'accès 48, et,
- une étape 49 de retrait ou collecte en partie opérée manuellement par la personne réceptrice 3.

On a vu que dans la construction 5, plusieurs casiers à verrou 13 présentent chacun au moins deux propriétés d'entreposage choisies et qu'à la commande chaque propriété d'entreposage est activable ou désactivable de manière temporisée, lors de l'étape de configuration 50 de la structure logistique 2, et plus particulièrement de divers casiers 13 concernés par une commande 9. Il s'agit

Dès lors :
- en cas de commande 9 d'un article acquis 4, le procédé 1 opère l'étape 21 d'examen de corrélation. Dans l'exemple de la figure 1, cette étape d'examen de corrélation 21 recherche si la typologie d'exigence de conservation associée à chaque article acquis 4 et commandé est en adéquation avec l'une des propriétés d'entreposages d'au moins un casier à verrou 4 disponible.

On le comprend, d'autres paramètres de compatibilité entre un article 4 donné et un casier 13 déterminé comme disponible (libre au moment prévu de mise à disposition) et possédant les fonctions d'entreposage requises (e.g. frigorifiques), sont vérifiés : notamment, le gabarit, la masse, les conditions spécifiques de sécurité (par exemple pour une bouteille de gaz combustible), etc.

Puis, lors de l'étape d'ordonnancement 31 du procédé 1 le système 15 associe un horaire de mise à disposition de l'article acquis 4 dans la construction fixe 5, et fait correspondre cet horaire à un créneau de mise en marche lors de laquelle la propriété d'entreposage en corrélation est activée. C'est aussi lors de l'étape d'ordonnancement 31 qu'est programmé pour cet horaire, le dispositif de fermeture / ouverture 14, afin que la porte 16 puisse être ouverte à l'étape de chargement 34, verrouillée ensuite pendant l'attente de mise à disposition, puis puisse être dé verrouillée et ouvrable lors du retrait (étape 49) par la personne réceptrice 3.

Selon cet exemple, le système informatisé 15 associe à chaque article acquis 4 un gabarit logique 37 préenregistré propre et possède en mémoire un encombrement interne propre à chaque casier à verrou 13. L'étape d'examen de corrélation 21 comporte alors une sélection d'au moins un casier à verrou 13 dont l'encombrement interne coïncide avec le gabarit 37 de l'article 4 commandé, afin que l'article 4 soit placé dans ce casier 13 lors d'une étape de chargement 34.

L'étape d'examen de corrélation 21, d'autres paramètres propres à un article donné 4, sont considérés pour définir la typologie d'exigence de conservation complète de cet article 4.

Par exemple, plusieurs casiers à verrou 13 sont de type présentant chacun plusieurs propriétés d'entreposage e.g: propriété d'entreposage sec tempéré, propriété d'entreposage ventilé, propriété d'entreposage rafraichi, propriété d'entreposage frigorifique, propriété d'entreposage réchauffé et/ou propriété d'entreposage illuminé

Dans l'exemple de la figure 3, chaque propriété d'entreposage est activable et désactivable à la demande, à distance et de manière temporisée par la temporisation 52 qui participe ici à l'étape d'ordonnancement 31 et de configuration 50. Egalement, une propriété d'entreposage préalablement activée pour la réception d'un article 4 donné, est ici désactivée de manière temporisée (52) lors de l'étape de retrait 49.

Selon la réalisation de la figure 3, le procédé 1 clos la boucle en initialisant le casier 13 après le retrait (49), pour qu'il soit vu comme à nouveau disponible et modulable par le système 15, afin de pouvoir à nouveau être employé.

On comprend que pour un entreposage approprié à certains articles, plusieurs propriétés d'entreposage peuvent être actionnées simultanément selon l'invention.

Selon l'exemple de la figure 2, on voit que plusieurs casiers à verrou 13 ayant la même propriété d'entreposage activée lors de l'étape d'ordonnancement 31 et de configuration 50, sont déterminés automatiquement par le système informatisé 15 de façon à être mitoyens au sein de la construction fixe, comme le groupe 32 déjà décrit.

Dans le même ordre d'idées, des exemples prévoient de regrouper dans un seul casier 13 lors des étapes d'ordonnancement 31 et / ou de coordination, plusieurs articles 4 d'une même et unique commande 9, donc destinés à la même personne réceptrice 3, à condition que ces articles 4 présentent des propriétés d'entreposage compatibles, concordantes voire identiques, et dans la mesure où le système informatisé 15 détermine qu'un encombrement interne de ce casier 13 englobe la somme de chaque gabarit logique 37 de ces articles 4.

Sur la figure 3 lors de l'étape de commande 9 de l'article 4, est prévue une étape de pré paiement 11 de l'article 4. Ces étapes (9, 11) sont opérées ici par un intermédiaire choisi parmi : vente par correspondance, transaction électronique en ligne et commande à un guichet d'accueil physique.

Selon cet exemple, l'intérieur de la construction fixe 5 comporte au moins une interface homme-machine 22 de mise à disposition, et fait partie du système informatisé 15. Chaque casier à verrou 13 est ici pourvu d'un dispositif de fermeture 14 piloté par le système informatisé 15, tel que chaque casier 13 où est entreposé un article acquis 4 est verrouillé suite à l'étape de chargement 34. Lors de l'étape de retrait 49, i.e. de collecte de l'article acquis 4 par la personne réceptrice 3, est opérée la phase d'autorisation d'accès 48 au casier 13 lors de laquelle l'interface homme-machine 22 est ici opérée par la personne 3 de façon à autoriser la cessation du verrouillage par le dispositif de fermeture / ouverture 14.

Selon un exemple, l'horaire de mise à disposition de l'article acquis qui correspond au créneau de mise en marche est choisi parmi les périodes suivantes : de 20 heures à 24 heures par jour, de 6 à 7 jours par semaine, de 313 jours à 365 jours par an.

Classiquement, les périodes auxquelles une construction fixe 5 et les casiers à verrou 13 s'y trouvant sont rendus accessibles sont décidées et ajustées au fil des semaines et mois, par l'administrateur du système informatique 15, par exemple une enseigne de grande distribution, une fédération de commerçants ou un groupement d'intérêt local.

Précisons ici qu'à l'heure actuelle, dans des réalisations, les étapes de transport, d'installation, de raccordement fonctionnel et de chargement nécessitent une intervention humaine, voire sont entièrement opérées de façon manuelle.

A l'inverse, d'autres étapes du procédé 1 de mise à disposition sont opérées automatiquement en fonction des commandes administrées, comme les étapes d'examen de corrélation 21, d'ordonnancement 31, de configuration 50 et d'autorisation 48.

Dans des réalisations de l'invention, les données utiles au procédé 1 telles que les codes d'accès aux casiers 13, les plages horaires, le gabarit logique 37 préenregistré, la propriété d'entreposage et d'autres paramètres propres à un article 4 donné, sont enregistrées dans de des zones mémoires 28 du système informatisé 15, typiquement au sein de bases de données.

Bien sûr, chaque commande peut comporter un ou plusieurs articles acquis 4. Aussi l'un ou tous ces articles acquis 4 peuvent non seulement avoir été achetés, mais aussi loués, prêtés ou fournis à divers titres e.g. gracieux, onéreux, d'échange. Egalement, plusieurs mises à disposition destinées à plusieurs personnes réceptrices 3 sont aussi visées ici. Dans les exemples, les structures permettent la mise à disposition conjointe voire simultanée, de plusieurs articles acquis 4 à diverses personnes réceptrices distinctes.

Un avantage de l'invention est que sur la construction 5 des espaces publicitaires 40 sont prévus. Ces espaces peuvent être achetés par une enseigne e.g. le commerce où la commande a été passée, d'autres fournisseurs de service ou à des institutions telles qu'une commune accueillant l'invention.

Aussi, l'invention permet à un la personne 3 de récupérer sur un lieu à proximité de son habitation, de son travail ou du commerce dont les articles 4 sont issus, des produits qu'il a préalablement commandés, et cela avec une grande amplitude horaire de retrait des marchandises.

Avec des constructions 5 e.g. sous forme de local modulaire de 10-20 m² au maximum (combinables par tranches de 10-20 m²), la mise à disposition selon l'invention est transférable d'un point à un autre en cas d'implantation insatisfaisante, ou de pic de charge à un emplacement moins utile.

L'invention est simple : une commande passée et réglée en ligne sur le site du distributeur est acheminée dans la construction, par exemple appelée « Drive Box ».

La personne 3 se voit délivrer au moment de sa commande sur le site sécurisé un « code secret commande » qui lui permet d'avoir accès à l'entrée de la construction 5 et d'ouvrir également les casiers 13 contenant ses commandes 6.

La personne 3 dispose dans une réalisation d'un délai fixé par l'enseigne pour retirer sa marchandise. La gestion d'un planning d'horaires limite de commande et de retrait doit permettre deux approvisionnements par jour par l'administrateur et permettre deux plages horaires par jour au moins pour le retrait par la personne 3.

Pour finir, résumons quelques avantages de l'invention:
Pour la personne 3:
   - Proximité,
   - Gain de temps pour faire ses courses (même principe que le retrait-auto),
   - Accessible jusqu'à 24h/24h.

Pour l'administrateur, par exemple un supermarché:
- Une image dynamique de la marque (innovation, service),
- Une meilleure géolocalisation,
- Un point relais renforçant sa communication,
- une implantation dans des zones où son enseigne n'apparaît pas.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

Il est bien sûr envisageable de remplacer un moyen décrit par un moyen équivalent sans sortir du cadre de la présente invention.

## Revendications

1. Procédé (1) de contrôle d'une structure logistique (2) de mise à la disposition d'une personne réceptrice, d'au moins un article acquis et commandé; le procédé (1) comportant des étapes exécutées automatiquement par traitement informatique effectué par un système informatisé (15) auquel la structure logistique (2) est interconnectée; la structure logistique (2) comportant une construction fixe (5), prévue pour abriter la personne réceptrice (3), à l'intérieur de laquelle sont agencés des casiers à verrou (13), chacun pourvu d'un dispositif de fermeture / ouverture piloté (14) par le système informatisé (15); ce système (15) associant à chaque article acquis (4) une typologie d'exigence de conservation propre; **caractérisé en ce que** :
- plusieurs casiers à verrou (13) de la construction fixe présentent chacun au moins deux propriétés d'entreposage choisies entre : propriété d'entreposage rafraichi et propriété d'entreposage frigorifique; chaque propriété d'entreposage étant activable ou désactivable de manière temporisée lors d'une étape de configuration (50) de la structure logistique (2) pour une mise à disposition donnée,
- en cas de commande (9) d'un article acquis (4), le procédé (1) opère une étape d'examen de corrélation (21) qui recherche si la typologie d'exigence de conservation associée à chaque article acquis (4) et commandé est en adéquation avec l'une des propriétés d'entreposages d'au moins un casier (13),
- une étape d'ordonnancement (31) associe un horaire de mise à disposition de l'article (4) dans la construction fixe, fait correspondre cet horaire à un créneau de mise en marche lors de laquelle la propriété d'entreposage en corrélation est activée et programme pour cet horaire le dispositif de fermeture / ouverture (14).

2. Procédé (1) selon la revendication 1,
**caractérisé en ce que** le procédé (1) comporte une étape de transport d'une construction fixe de type préfabriquée en usine et prête à l'emploi, et une étape d'installation de la construction à un emplacement de destination ; l'emplacement de destination possédant un accès libre depuis une voie publique ou via un espace dans lequel la personne réceptrice peut pénétrer à l'envie ; l'étape d'installation étant suivie d'une étape de raccordement fonctionnel de la construction au sein de la structure logistique (2).

3. Procédé (1) selon la revendication 1,
**caractérisé en ce que** le procédé (1) comporte au moins une étape de commande de l'article et une étape de pré paiement de l'article ; au moins l'une des étapes de commande et de pré paiement de l'article est opérée par un intermédiaire choisi parmi :
vente par correspondance, transaction électronique en ligne et commande à un guichet d'accueil physique.

4. Procédé (1) selon la revendication 1,
**caractérisé en ce que** l'intérieur de la construction fixe comporte une interface homme-machine de mise à disposition, qui fait partie du système informatisé; chaque casier à verrou est pourvu d'un dispositif de fermeture piloté par le système informatisé, tel que chaque casier où est entreposé un article acquis est verrouillé suite à une étape de chargement ; le procédé (1) comprend lors d'une étape de retrait, i.e. de collecte de l'article acquis par la personne réceptrice, une phase d'autorisation d'accès au casier à verrou lors de laquelle l'interface homme-machine est opérée par la personne réceptrice de façon à autoriser la cessation d'un verrouillage par le dispositif de fermeture / ouverture.

5. Procédé (1) selon la revendication 1,
**caractérisé en ce que** le système informatisé (15) associe à chaque article acquis un gabarit logique préenregistré propre et possède en mémoire un encombrement interne propre à chaque casier à verrou; l'étape d'examen de corrélation comportant une sélection d'au moins un casier à verrou dont l'encombrement interne coïncide avec le gabarit logique de chaque article acquis commandé, afin que l'article soit placé dans ce casier lors d'une étape de chargement.

6. Procédé (1) selon la revendication 1,
**caractérisé en ce que** plusieurs casiers à verrou sont de type climatisés et présentent chacun au moins trois propriétés d'entreposage parmi : propriété d'entreposage sec tempéré, propriété d'entreposage ventilé, propriété d'entreposage rafraichi, propriété d'entreposage frigorifique, propriété d'entreposage réchauffé et/ou propriété d'entreposage illuminé chaque propriété d'entreposage est activable et désactivable à la demande, à distance et de manière temporisée lors de l'étape d'ordonnancement ; une propriété d'entreposage activée est désactivée de manière temporisée lors d'une étape de retrait par la personne réceptrice.

7. Procédé (1) selon la revendication 6,
**caractérisé en ce que** plusieurs casiers à verrou ayant la même propriété d'entreposage à activer lors de l'étape d'ordonnancement sont déterminés automatiquement par le système informatisé (15) lors de l'étape d'ordonnancement, de façon à être mitoyens au sein de la construction fixe.

8. Procédé (1) selon la revendication 1,
**caractérisé en ce que** l'horaire de mise à disposition de l'article acquis qui correspond au créneau de mise en marche est choisi parmi les périodes suivantes : de 20 heures à 24 heures par jour, de 6 à 7 jours par semaine, de 313 jours à 365 jours par an.

9. Procédé (1) selon la revendication 1,
**caractérisé en ce que** le procédé (1) prévoit successivement au moins:
- une étape de transport,
- une étape d'installation,
- une étape de raccordement fonctionnel, pour rendre opérationnelle une construction fixe de type préfabriquée en usine et prête à l'emploi,
puis, une fois la construction fixe opérationnelle, lors d'une commande, le procédé (1) exécute successivement et au moins en partie automatiquement au moins:
- une étape d'examen de corrélation,
- une étape d'ordonnancement,
- une étape de configuration,
- une étape de chargement, en partie opérée manuellement par une personne dite agent,
- une phase d'autorisation d'accès, et,
- une étape de retrait ou collecte en partie opérée manuellement par la personne réceptrice.

10. Procédé (1) selon la revendication 1,
**caractérisé en ce que** le système informatisé (15)comporte un ordinateur avec au moins: un processeur, des zones mémoires, des interfaces de communication et des programmes aptes à exécuter des instructions pour que l'ordinateur opère des traitements locaux et à distance, d'automatisation d'étapes du procédé (1); des traitements sont opérés à partir de données issues d'un appareil de transmission d'informations employé par la personne réceptrice; des éléments d'information de la commande sont échangées entre l'appareil et des zones mémoire (28) accessibles depuis la construction fixe, pour subir une authentification de cet appareil et / ou de la commande et / ou de la personne réceptrice, puis pour encrypter les éléments d'information afin de les rendre confidentielles.

11. Procédé (1) selon la revendication 1,
**caractérisé en ce que** les casiers à verrou présentant au moins deux propriétés d'entreposage comportent chacun au moins un capteur de présence du ou des articles entreposés, ce capteur de présence étant en liaison logique avec le système informatisé (15) de sorte que suite à une activation d'une propriété d'entreposage et suite à l'étape de chargement du ou des articles entreposés dans un casier à verrou donné, tant que le capteur de présence correspondant indique au système informatisé (15) que le ou les articles sont toujours présents dans ce casier à verrou donné, cette propriété d'entreposage activée est maintenue.

12. Procédé (1) selon la revendication 11,
**caractérisé en ce que** une temporisation avant possible coupure du maintien de la propriété d'entreposage activée est enclenchée lorsque le capteur de présence correspondant indique au système informatisé (15) que le ou les articles ne sont plus présents dans ce casier à verrou donné et que le dispositif de fermeture / ouverture du casier à verrou donné indique au système informatisé (15) que l'une porte d'accès a été ouverte.

13. Structure logistique (2) de mise à la disposition d'une personne réceptrice, d'au moins un article acquis commandé via une vente par correspondance; la structure logistique (2) comprenant un système informatisé (15) auquel la structure logistique (2) est interconnectée pour exécuter automatiquement des traitements informatiques de contrôle; la structure logistique (2) comportant une construction fixe, prévue pour abriter la personne réceptrice, à l'intérieur de laquelle sont agencés des casiers à verrou, chacun pourvu d'un dispositif de fermeture / ouverture piloté par le système informatisé; le système informatisé (15) associant à chaque article acquis une typologie d'exigence de conservation propre; **caractérisée en ce que** la structure (2) comporte:
- plusieurs casiers à verrou de la construction fixe présentent chacun au moins deux propriétés d'entreposage choisies entre : propriété d'entreposage sec tempéré, propriété d'entreposage rafraichie et / ou propriété d'entreposage frigorifique; chaque propriété d'entreposage étant activable ou désactivable de manière temporisée lors d'une étape de configuration de la structure logistique (2) pour une mise à disposition donnée,
- le système informatisé (15) étant agencé pour qu'en cas de commande d'un article acquis, soit opérée une étape d'examen de corrélation qui recherche si la typologie d'exigence de conservation associée à chaque article acquis commandé est en adéquation avec l'une des propriétés d'entreposages d'au moins un casier à verrou, de sorte qu'à une étape d'ordonnancement, le système informatisé (15) associe un horaire de mise à disposition de l'article acquis dans la construction fixe, fait correspondre cet horaire à un créneau de mise en marche lors de laquelle la propriété d'entreposage en corrélation est activée et programme pour cet horaire le dispositif de fermeture / ouverture.

14. Structure logistique (2) selon la revendication 13, **caractérisée en ce que** la construction fixe est de type préfabriquée en usine et prête à l'emploi, et l'emplacement de destination possède un accès libre depuis une voie publique ou via un espace dans lequel la personne réceptrice peut pénétrer à l'envie.

15. Structure logistique (2) selon la revendication 13, **caractérisée en ce que** plusieurs casiers à verrou sont de type climatisés et présentent chacun au moins trois propriétés d'entreposage dont une propriété d'entreposage sec tempéré, une propriété d'entreposage rafraichie et une propriété d'entreposage frigorifique; chaque propriété d'entreposage est activable et désactivable à la demande et de manière temporisée lors de l'étape d'ordonnancement ; une propriété d'entreposage activée est désactivée de manière temporisée lors d'une étape de retrait par la personne réceptrice.
